# EUROPEAN PATENT APPLICATION

(11) **EP 0 594 228 A2**
(43) Date of publication of application: **27.04.1994**
(21) Application number: 93201963.1
(22) Date of filing: 06.07.1993
(51) Int. Cl.: C08L 71/12, C08G 65/46, C08J 3/14, C08J 3/12

(54) **Process for removing volatile components from solutions containing polyphenylene ethers**

(30) Priority: 23.07.1992 IT MI921784
(71) Applicant: ENICHEM S.p.A., I-20124 Milano (IT)
(72) Inventor: Dall'Acqua, Dino, I-30175 Mestre (Venezia) (IT); Pippa, Roberto, I-30033 Noale (Venezia) (IT); Busati, Vaifro, I-30038 Spinea (Venezia) (IT); Corso, Giampietro, I-30030 Salzano (Venezia) (IT); Tartari, Vittorio, I-31100 Treviso (IT)
(74) Representative: Fusina, Gerolamo

(57) **Abstract**

A process and apparatus for devolatilizing solutions of polyphenylene ethers, or of mixtures thereof with other polymers, to obtain a solid product with a residual solvent content of less than 5 wt% and preferably less than 2 wt%, and a negligible content of particulate matter with a maximum particle size of less than 0.1 mm, comprising:
a) concentrating the solution by evaporating part of the solvent at high pressure and temperature, and
b) expanding the concentrated and compressed solution from a) as it leaves a die, then removing the solvent which evaporates during the expansion.

## Description

This invention relates to a process for removing volatile components from solutions containing polyphenylene ethers.

In particular, the invention relates to a process and apparatus for separating polyphenylene ethers, or their mixtures with other polymers, from solutions in organic solvents by removing part of the solvent under high pressure, followed by expanding the concentrate through a die.

The invention also relates to particular granular polyphenylene ethers obtainable by said process, which have a high apparent density, a narrow granule size distribution and no fine powder.

The polyphenylene ethers (PPEs), also known as polyphenylene oxide resins, represent a well known family of engineering polymers and possess a good combination of thermal, mechanical and electrical properties within a wide temperature range; they also show excellent resistance to moisture. This combination of properties makes polyphenylene ethers suitable for use in a large number of applications by injection moulding or extrusion.

Polyphenylene ethers are generally produced by oxidizing a phenolic compound with oxygen or a gaseous mixture containing oxygen, in the presence of a catalyst by oxidative coupling.

Processes using this method of preparation are described for example in US patents 3,306,875 and 3,965,069, according to which the polymer is obtained by the oxidative coupling, in solution, of one or more phenolic derivatives in the presence of catalysts containing Cu or Mn salts.

The process conditions can be chosen so that the polyphenylene ethers precipitate from the solution when a sufficiently high molecular weight has been reached, but it is usually preferable to recover the polymers from their solutions by precipitation following the addition of a non-solvent.

Recovery by precipitation has however the drawback of obtaining the polymer in the form of a very fine powder, leading to those problems which typically arise in the storage, handling and transformation of powders of average particle size less than 10 µ, such as the danger of explosion, increased difficulty in operating the extrusion and moulding apparatus, and harm to operator health.

Again, the removal of the solvent by evaporation or desolventation in an extruder involves keeping the polyphenylene ether at high temperature for a relatively long period, with consequent degradation of the polymer, which as is well known already undergoes thermal degradation at a temperature below its melting point. This degradation causes the product to become yellow and negatively influences its chemical and physical properties, reducing for example its toughness.

EP 226,204 describes a process for devolatilizing highly viscous polymeric solutions in which the solution is passed through a plate hear exchanger and emerges into a chamber in which the solvent is removed and the residual molten polymer is collected from the bottom. Notwithstanding the residence time of 5 to 120 seconds, this process is not applicable to solutions containing PPE, both because of the high viscosity of the polymer which does not allow it to run quickly into the collection chamber, and because of the high temperature which has to be used.

Film devolatilizing methods also have numerous problems when applied to concentrated polyphenylene ether solutions, mainly because of the high viscosity and/or high temperature attained by the polymer in the molten state.

It is therefore apparent that notwithstanding their excellent thermal and mechanical properties which make them outstanding engineering polymers, polyphenylene ethers are difficult to use in many applications because of the problems which are encountered both in their production and in their subsequent working to produce the finished article.

In this respect, PPEs as such are difficult to extrude or mould, even using stabilizing agents, because the temperature at which the viscosity of the molten material becomes sufficiently low to allow it to be easily worked in normal extrusion or moulding machines without shear forces sufficient to cause physical degradation of the polymer arising is already sufficiently high to cause its rapid thermal degradation.

To prevent such degradation, polymeric additives, usually polystyrene or its derivatives, are frequently added so that the resultant mixture has greater fluidity and workability in the molten state. For example, Canadian patent 1,063,761 describes a method for preparing compositions comprising PPE and styrene polymers based on extrusion from solution.

However such mixtures also suffer from degradation problems both if prepared from the molten material and if prepared in solution and then subjected to devolatilization, unless large quantities of the polymeric additive are added, in which case there is a worsening in the excellent thermal properties (high glass transition temperature) typical of PEEs.

An object of the present invention is therefore to provide a process for removing volatile components from solutions of polyphenylene ethers or their mixtures with other polymers, without encountering the aforesaid problems.

A further object of the present invention is to provide an apparatus for implementing the above mentioned process.

Another object of the present invention is to prepare particular granular polyphenylene ethers with high apparent density and narrow granule size distribution.

It has now been surprisingly found by the present applicant that these and further objects are attained by a process and apparatus in which the volatile components of organic solvent solutions of polyphenylene ethers or their mixtures with other polymers are removed in two successive stages in which the first is effected under pressure.

The present invention therefore provides a process for devolatilizing a solution of a polyphenylene ether, or of a mixture thereof with other polymers, in an organic solvent, comprising the following stages in succession:
a) concentrating the solution by evaporating part of the solvent at high pressure and temperature until a total polymer content of between 40 and 90% by weight of the total solution weight is achieved;
b) feeding the concentrated solution from a) to a die at a pressure equal to or greater than that of stage a); and
c) expanding the solution through the die to a pressure equal to or less than atmospheric, with simultaneous removal of the solvent evaporated during the expansion;
to obtain a solid polymeric product consisting essentially of the polyphenylene ether or its mixture with other polymers.

The product obtained by this process consists essentially of a polyphenylene ether, or a mixture thereof with other polymers, having an apparent density greater than 0.3 g/cc and up to 0.9 g/cc, preferably greater than 0.5 g/cc, a residual solvent content less than 5 wt% and preferably less than 2 wt%, and less than 1 wt% of particulate matter having a maximum particle size of less than 0.1 mm.

The term "maximum particle (or granule) size" as used in the present patent application refers to the length of the segment joining the two most distant points of an individual particle (or granule).

Those polyphenylene ethers suitable for the present invention are polymers and copolymers comprising a plurality of structural units of formula (I): 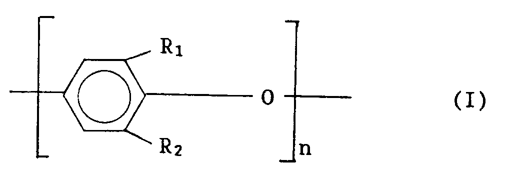
in which R₁ and R₂, which are the same or different, represent a hydrogen or halogen atom, or a substituted or non-substituted hydrocarbon radical, or a C₁-C₆ alkoxy radical, and n is at least 50 and preferably between 60 and 600.

Examples of R₁ or R₂ are hydrogen, halogen such as chlorine, bromine or fluorine, or a C₁-C₁₈ hydrocarbon radical such as an alkyl radical or a substituted alkyl radical, for example methyl, ethyl, n- and iso-propyl, n-, sec- and tert-butyl, n-amyl, n-hexyl, 2,3-dimethylbutyl, chloroethyl, methoxycarbonylethyl, cyanoethyl, hydroxyethyl, phenylethyl, hydroxymethyl, or an aryl or substituted aryl radical such as phenyl, chlorophenyl, methylphenyl, dimethylphenyl, ethylphenyl, a benzyl radical, an allyl radical or finally a C₁-C₆ alkoxy radical such as methoxy, ethoxy, n- and iso-propoxy, and n-, iso- and tert-butoxy.

These polymers and their preparation processes are widely described in the literature. Examples are USA patents 3,226,361, 3,234,183, 3,306,874, 3,306,875, 3,257,357, 3,257,358 etc., the contents of which form an integral part of the present description as reference.

Illustrative examples of polyphenylene ethers particularly suitable for the present invention are:
- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether and the like;
poly(2,6-dimethyl-1,4-phenylene)ether is particularly preferred.

The term "polyphenylene ether" as used in the present description and claims includes both homopolymers and copolymers containing different structural units of said formula (I), such as copolymers comprising units deriving from 2,6-dimethylphenol and 2,3,6-trimethylphenol. The term "polyphenylene ether" also includes graft copolymers obtained by grafting onto the polyphenylene ether chain one or more vinyl monomers such as acrylonitrile or vinylaromatic compounds such as styrene, or polymers such as polystyrene or elastomers.

The polyphenylene ethers generally have an average molecular weight, determined by gel permeation chromatography, of between 5000 and 120,000, and an intrinsic viscosity (measured in chloroform at 23°C) greater than 0.1 dl/g and very often between 0.30 and 0.90 dl/g.

These polyphenylene ethers can be produced by oxidizing a phenolic compound with oxygen or a gaseous mixture containing oxygen, in the presence of an oxidative coupling catalyst. Any known catalyst for oxidation polymerization can be used. Generally they contain at least one compound of a transition metal such as copper, manganese or cobalt, usually in combination with other types of catalytic compounds. Examples of suitable catalysts are those containing a cuprous or cupric salt, for example a cuprous salt in combination with a tertiary and/or secondary amine, such as copper(I)chloride/trimethylamine, copper(I)chloride/dibutylamine or copper(I)chloride/pyridine, or copper(I)acetate/triethylamine, or a cupric salt in combination with a tertiary amine and an alkaline metal hydroxide, such as copper(II)chloride/pyridine/potassium hydroxide. These catalysts are described for example in USA patents 3,306,874, 3,914,266 and 4,028,341.

Another class of suitable catalysts are those containing manganese or cobalt, very often complexed with one or more chelating and/or complexing agents such as dialkylamines, alkanolamines, alkylenediamines, o-hydroxyaromatic aldehydes or o-hydroxyazo, Ω-hydroxyoxime, o-hydroxyaryloxime or β-diketone compounds. All these catalysts are well known in the literature and are described for example in USA patents 3,956,242, 3,962,181, 3,965,069, 4,075,174, 4,093,595-8, 4,102,865, 4,184, 034, 1,385,168 etc.

The process of the present invention is advantageously applicable not only to polyphenylene ether solutions but also to solutions of mixtures of polyphenylene ethers with other polymers. Preferably such mixtures, many of which are already used commercially, contain up to 30 wt% of one or more polymers other than PPE.

Preferred mixtures for the present invention are those which, in addition to PPE, also contain polycarbonate, polyamides such as nylon 6, nylon 6,6, nylon 11, nylon 12, nylon 6,11 etc, styrene polymers such as polystyrene and polymers derived therefrom, polyesters such as PET or PBT, elastomers such as high molecular weight rubber polymers, including natural and synthetic polymeric materials with elastic behaviour at ambient temperature.

Examples of rubber polymers are linear poly(methymethacrylate-butadiene-styrene) copolymers and (vinylaromatic and/or acrylic polymer)-(conjugated polydiene) block copolymers of type A-B or A-B-A in hydrogenated, partly hydrogenated or non-hydrogenated form, such as polystyrene-polybutadiene, polystyrene-polyisoprene or poly-α-methylstyrene-polybutadiene diblock copolymers, or polystyrene-polybutadiene-polystyrene, polystyrene-polyisoprene-polystyrene or poly-α-methylstyrene-polyisoprene-poly-α-methylstyrene triblock copolymers, or polystyrene-poly(ethylene-propylene) block copolymers, or butadiene-styrene copolymers, ethylene-propylene (EPR) copolymers, or ethylene-propylene-(non-conjugated diene) (EPDM) terpolymers. For the purposes of the present invention, mixtures of PPE with less than 10% of other polymers are particularly preferred.

The solvent medium contained in the polyphenylene ether solutions usable for the present process can be any low viscosity liquid able to dissolve said polymers and sufficiently volatile to be removed to the extent of more than 95% under the conditions of the process of the present invention. Typical examples of these solvents are aromatic solvents such as toluene, benzene, xylenes, tetraline, ethylbenzene and the like, or aliphatic solvents such as THF or dioxane, or halogenated solvents such as chloroform or trichloroethane, or a mixture thereof. Toluene and xylenes are preferred for the present invention.

According to the process of the present invention, in stage a) a solution containing form 5 to 50 wt% of a polyphenylene ether, or a mixture thereof with other polymers, and usually originating directly from a synthesis process, is compressed to a pressure of between 4 and 20 atm, preferably between 4 and 10 atm, and is heated to a temperature higher than its boiling point at said pressure. A part of the solvent is then removed by evaporation until the equilibrium concentration under the set pressure and temperature conditions is reached. Under these conditions the solution generally contains between 40 and 90 wt%, and preferably between 60 and 80 wt%, of polymer, but has high fluidity because of the high temperature.

In stage b) the concentrated solution from stage a) is fed to a die at a pressure at least equal to the pressure of stage a). The concentrated solution is preferably fed to the die by a liquid pump.

In stage c) the concentrated solution is passed through a die and allowed to expand to atmospheric or less than atmospheric pressure, to hence complete the devolatilization process and obtain the solid polymer product in the form of semiexpanded spaghetti.

The evaporated solvent is removed preferably in an air stream, and is then condensed by any known apparatus suitable for the purpose.

The polyphenylene ether or a mixture thereof with other polymers as obtained by the present process in the form of semiexpanded spaghetti can be then compressed by one of the known methods, such as calendering, and cut into granules having an average size of between 0.5 and 20 mm and preferably between 0.5 and 5 mm, and an apparent density exceeding 0.3 g/cc and up to 0.9 g/cc, and preferably exceeding 0.5 g/cc.

The process is implemented preferably by an apparatus, forming one aspect of the present invention, which comprises in succession:
i) a liquid compression pump connected to an evaporator for concentrating polymer solutions which is able to operate at a pressure of at least 4 atm and preferably up to 20 atm;
ii) a collection chamber consisting of a closed vessel able to withstand an internal pressure of at least 4 atm and preferably up to 20 atm, which is connected to the evaporator via a sealed connection and is provided with a pneumatic valve for pressure regulation;
iii) a die connected in a sealed manner to the collection chamber and possibly provided with a second liquid compression pump between the chamber and the die, which is provided at its outlet with an expansion chamber preferably under suction.

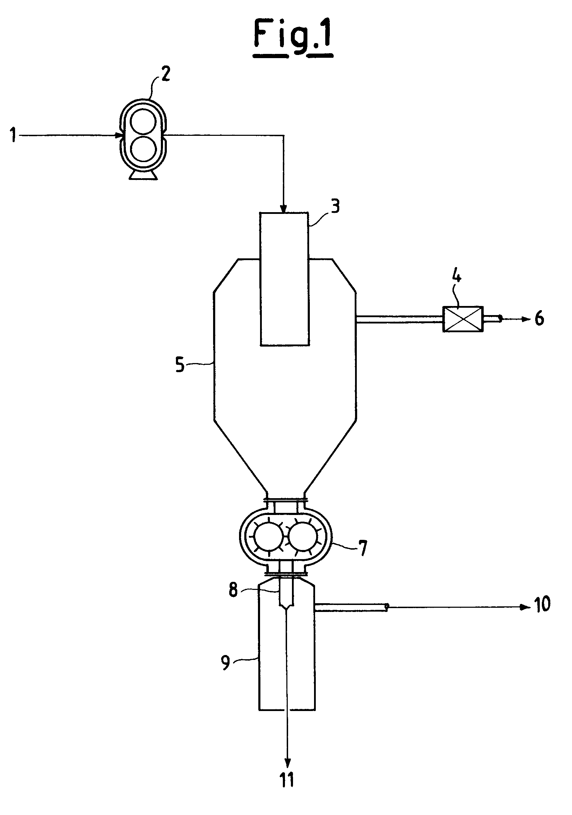

The characteristics of the process of the present invention will be more apparent from the detailed description given hereinafter with reference to Figure 1 of the accompanying drawing, which schematically represents an apparatus suitable for implementing the process. The present invention is not however to be considered as limited to this apparatus, which represents only one particular embodiment thereof.

The apparatus shown in Figure 1 comprises a solution feed line 1 connected via a liquid pump 2 to the evaporator 3 and then to a collection chamber 5. The chamber 5 is connected in a sealed manner to the evaporator 3 and is provided with a pneumatic valve 4 connected at its outlet to the line 6. The base of the chamber 5 communicates via the pump 7 with a die 8, at the exit of which there is a solvent draw-off chamber 9 the outlet of which is connected to the line 10. The devolatilized PPE leaves the chamber 9 in the direction of the arrow 11.

Typically, during the course of the process according to the invention a polymer solution containing between 5 and 50 wt% and preferably between 10 and 30 wt% of a polyphenylene ether or a mixture of PPE with other polymers, dissolved in a suitable organic solvent, is fed via the line 1 to the pump 2, which feeds it to the evaporator 3. Here, the solution is heated to a temperature of between 220 and 290°C and preferably between 240 and 270°C, and is concentrated to a solute content of between 40 and 90 wt%. The concentrated solution is collected in the chamber 5 and is maintained at a pressure of between 4 and 20 atm, controlled by the pneumatic valve 4. The solvent vapour removed from the polymer solution in this stage is discharged in the direction of the line 6.

The pressure in the chamber 5, usually greater than 4 atm, can vary within wide limits and is chosen according to the other process parameters, such as the solvent, the solute, the concentration, the flow rate of the polymer solution and the percentage of solvent removed through the valve 4.

The temperature reached by the solution in the collection chamber 5 must be equal to or greater than the corresponding liquid/vapour equilibrium temperature of the solution at the operating pressure programmed in stage a). This temperature is generally greater than 200°C and preferably between 220 and 290°C, but is in any event much lower than the temperature required for devolatilizing the PPE in known processes. In this respect, concentration occurs in the chamber 5 rather than complete devolatilization.

This not only prevents polymer thermal degradation arising but also means that the inner walls of the chamber can be lined with anti-adhesion polymers such as teflon or other fluorinated polymers, which ensure excellent flow of the concentrate along the walls and prevent the formation of damaging incrustation. In this respect, such linings are generally used only at moderate temperature and preferably not higher than 270°C.

In this manner a better PPE quality is achieved, with easy maintenance of the process apparatus.

The concentrated polymer solution which collects on the bottom of the chamber 5 is transferred by the pump 7 to a die 8, at the exit of which the remaining solvent is instantly flash-evaporated and removed in the suction chamber 9.

The residual polyphenylene ether cools rapidly because of the solvent evaporation and hence undergoes no thermal degradation, as instead happens when a polyphenylene ether (especially if pure) is heated to its melting point. The polyphenylene ether obtained in this manner is in the form of non-fragile semiexpanded spaghetti with a residual solvent content of less than 2 wt%.

This spaghetti is then fed to a crushing and possibly compression system, from which the polyphenylene ether is obtained in the form of powderless chips or granules with an average maximum dimension of less than 0.1 mm.

The evaporator 3 can be any apparatus suitable for concentrating a polymer solution which is able to operate under pressure, and is preferably of the film type. Such an apparatus is frequently used in devolatilization processes, particularly when treating polymer solutions the viscosity of which does not exceed 10⁶ centipoises during the entire treatment. In such apparatus the polymer solution is passed through fissures heated by circulating diathermic oil, and then runs along the heated walls of a chamber so as to increase the liquid/vapour heat transfer surface.

Further constructional details of such apparatus can be found in the literature, such as in European patent application publication No. 352,727, the contents of which form an integral part of the present patent application as reference.

The constructional details of the die 8 are substantially the same as for known dies for obtaining fibres or spaghetti from molten polymers or polymer solutions with a viscosity of less than 10⁶ centipoises at the die operating temperature. In general, the die 8 can consist of one or more tubular channels of diameter between 2 and 10 mm.

It should be noted that all the operating stages and conditions of the present process are strictly integrated with each other and are essential in efficiently and economically preparing polyphenylene ethers, or their mixtures with other polymers, which have the aforesaid characteristics.

The process of the present invention is particularly advantageous when applied to polyphenylene ether solutions containing less than 5%, and preferably less than 3%, of other polymers, in particular polystyrene or its copolymers.

PPE is not usually obtainable as the pure polymer in granular solid form by the processes of the known art because of the excessive polymer degradation which they cause. In contrast, the present process enables polyphenylene ethers, and in particular poly-(2,6-dimethyl-1,4-phenylene)ether, to be obtained in a particularly pure form.

The present invention hence further provides polyphenylene ethers in granular form not containing further polymer additives, and which have a residual solvent content of less than 2 wt% and preferably 1 wt%, an average maximum granule dimension exceeding 0.5 mm and up to 20 mm, an apparent density between 0.3 and 0.9 g/cc and preferably greater than 0.5 g/cc, and less than 1 wt% of powder of size less than 0.1 mm.

Preferred polymers with the aforesaid characteristics are: poly(2,6-dimethyl-1,4-phenylene)ether; poly(2,6-diethyl-1,4-phenylene) ether; poly(2-methyl-6-ethyl-1,4-phenylene)ether; poly(2,6-dipropyl-1,4-phenylene)ether; and poly(2-ethyl-6-propyl-1,4-phenylene)ether. Poly(2,6-dimethyl-1,4-phenylene)ether obtained in the aforegoing manner and having a purity of not less than 99% is particularly preferred.

The polyphenylene ethers or their mixtures with other polymers, obtained by the process of the present invention, are substantially free of those PPE thermal degradation products generally contained in the corresponding products obtained by devolatilization processes of the known art.

Such PPE degradation products can be of various kinds and can be grouped into classes such as: insoluble crosslinking products (causing opacity and non-homogeneity), condensation products (causing yellowing), and low molecular weight oligomers (causing brittling).

The polyphenylene ethers obtained by the present process are particularly suitable for use in processes such as extrusion or moulding, in which it is preferred to feed the polymer in granular form free from fine particulate matter.

In addition, and in particular for polyphenylene ethers obtained in substantially pure form, any residual solvent content not only does not hinder the aforesaid compounding operations but in fact facilitates them. In this respect, the polyphenylene ethers are in the form of semiexpanded granules of relatively low rigidity, which can be advantageously worked without any unacceptable polymer degradation occurring.

A further advantage of the present process is the facility for obtaining granular polyphenylene ethers with an apparent density generally higher than those in powder form, leading to a consequent reduction in packaging and transport costs.

Finally, the polyphenylene ethers, and particularly poly(2,6-dimethyl-1,4-phenylene)ether, obtained in particularly pure granular form by the present process, allow greater freedom in formulating compositions suitable for the manufacture of articles, with evident advantage for the operators of the sector.

The polyphenylene ethers or their mixtures with other polymers obtained by the process of the present invention can be used particularly in the manufacture of articles with high thermal and mechanical characteristics and resistance to solvents and acids, they being hence especially suitable for the automobile industry and for the construction of casings or coverings for mechanical, electrical or electronic equipment.

Some illustrative examples, which are in no case to be considered as limitative, are given hereinafter to allow better understanding of the present invention and its implementation.

### EXAMPLE 1

A solution containing 30 wt% of polyphenylene ether (PPE) in toluene, maintained at a temperature of 100°C, is fed at a rate of 700 g/h to the film evaporator 3, which comprises a fissure of dimensions 0.1 x 2 x 180 mm, its walls being heated by circulation of diathermic oil.

The product leaving the fissure, at a temperature of 270°C and containing 70 wt% of PPE, is collected in the chamber 5 which is maintained at a temperature of 250°C by circulating diathermic oil through a jacket, and at a pressure of 9 kg/cm² by a pneumatic valve 4. The pressure drop measured between the fissure inlet and outlet is 8 kg/cm².

The PPE is pumped from the bottom of the chamber 5 by the pump 7 through a die having a length of 40 mm and nozzles of 4 mm diameter.

The solvent which flash-evaporates at the die exit is drawn through the chamber 9, maintained under slight vacuum, and is then recovered by condensation. By the effect of the flash evaporation the PPE leaving the die cools and swells, to already reach ambient temperature at a distance of about 20 cm from the orifices. The spaghetti obtained in this manner can then be calendered and cut into granules.

The residual toluene content of the PPE is about 1.5% of the weight of the polymer.

### EXAMPLE 2

A 30% solution of PPE in toluene is devolatilized under conditions analogous to those of Example 1, but with a 225°C exit temperature from the slit of the evaporator 3 instead of 270°C, and with a temperature and pressure in the chamber 5 of 220°C and 5.5 kg/cm² respectively instead of 250°C and 9 kg/cm² respectively. At the end of the process the residual toluene content is about 4% by weight.

### EXAMPLE 3

A 30% solution of PPE in toluene is devolatilized under conditions analogous to those of Example 1, but with a 290°C exit temperature from the slit of the evaporator 3 instead of 270°C, and with a temperature and pressure in the chamber 5 of 280°C and 15 kg/cm² respectively instead of 250°C and 9 kg/cm² respectively. At the end of the process the residual toluene content is about 0.7% by weight.

## Claims

1. A process for devolatilizing a solution of a polyphenylene ether, or of a mixture thereof with other polymers, in an organic solvent, comprising the following stages in succession:
a) concentrating the solution by evaporating part of the solvent at high pressure and temperature until a total polymer content of between 40 and 90% by weight of the total solution weight is achieved;
b) feeding the concentrated solution from a) to a die at a pressure equal to or greater than that of stage a); and
c) expanding the solution through the die to a pressure equal to or less than atmospheric, with simultaneous removal of the solvent evaporated during the expansion;
to obtain a solid polymeric product consisting essentially of the polyphenylene ether or its mixture with other polymers.

2. A process as claimed in claim 1, wherein the polyphenylene ether is a polymer or a copolymer comprising a plurality of structural units of formula (I): 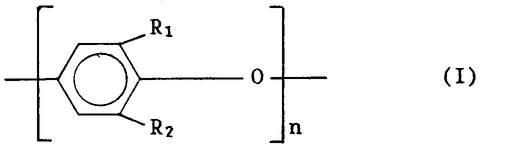 in which R₁ and R₂, which are the same or different, represent a hydrogen or halogen atom, or a substituted or non-substituted hydrocarbon radical, or a C₁-C₆ alkoxy radical, and n is at least 50 and preferably between 60 and 600.

3. A process as claimed in claim 2, wherein the polyphenylene ether is chosen from the group consisting of poly(2,6-dimethyl-1,4-phenylene)ether, poly(2,6-diethyl-1,4-phenylene)ether, poly(2-methyl-6-ethyl-1,4-phenylene)ether, poly(2,6-dipropyl-1,4-phenylene)ether, and poly(2-ethyl-6-propyl-1,4-phenylene)ether.

4. A process as claimed in any one of the preceding claims, wherein the polyphenylene ether has an average molecular weight, determined by gel permeation chromatography, of between 5000 and 120,000, and an intrinsic viscosity (measured in chloroform at 23°C) greater than 0.1 dl/g and preferably between 0.30 and 0.90 dl/g.

5. A process as claimed in claim 1, wherein the mixtures of polyphenylene ether with other polymers contain up to 30 wt%, and preferably up to 5 wt%, of a polymer chosen from the group consisting of polycarbonate, polyamides such as nylon 6, nylon 6,6, nylon 11, nylon 12 or nylon 6,11, styrene polymers such as polystyrene and polymers derived therefrom, polyesters such as PET or PBT, and mixtures thereof.

6. A process as claimed in any one of the preceding claims, wherein the organic solvent is chosen from the group consisting of toluene, benzene, xylenes, tetraline, ethylbenzene, THF, dioxane, chloroform, trichloroethane, and mixtures thereof.

7. A process as claimed in claim 6, wherein the organic solvent is toluene.

8. A process as claimed in any one of the preceding claims, wherein the solution to be devolatilized initially contains polyphenylene ether or a mixture thereof with other polymers, in a quantity of between 5 and 50 wt% and preferably between 10 and 30 wt%.

9. A process as claimed in any one of the preceding claims, wherein the concentrated solution obtained in stage a) contains polyphenylene ether or a mixture thereof with other polymers, in a quantity of between 60 and 80 wt%.

10. A process as claimed in any one of the preceding claims, wherein stage a) is conducted at a pressure of between 4 and 20 atm and preferably between 4 and 10 atm, and a temperature of between 220 and 290°C and preferably between 240 and 270°C.

11. A process as claimed in any one of the preceding claims, wherein in stage a), the solution is concentrated by a film evaporator.

12. A process as claimed in any one of the preceding claims, wherein in stage b), the concentrated solution is fed to the die by a liquid pump.

13. A process as claimed in any one of the preceding claims, wherein the die consists of one or more tubular channels having a diameter of between 2 and 10 mm.

14. A process as claimed in any one of the preceding claims, wherein the solid polymer product obtained in stage c) is possibly compressed by calendering and cut into granules.

15. Granular polyphenylene ethers, possibly containing up to 30 wt% of other polymers and obtained by the process of claim 14, having an average maximum granule dimension of between 0.5 mm and 20 mm and preferably between 0.5 and 5 mm, an apparent density exceeding 0.3 g/cc and up to 0.9 g/cc and preferably greater than 0.5 g/cc, and a residual solvent content of less than 5 wt% and preferably less than 2 wt%, containing less than 1 wt% of particulate matter with a particle size of less than 0.1 mm, and substantially free of polyphenylene ether thermal degradation products.

16. An apparatus for implementing the process claimed in any one of claims 1 to 14, comprising:
i) a liquid compression pump (2) connected to an evaporator (3) for concentrating polymer solutions which is able to operate at a pressure of at least 4 atm and preferably up to 20 atm;
ii) a collection chamber (5) consisting of a closed vessel able to withstand an internal pressure of at least 4 atm and preferably up to 20 atm, which is connected to the evaporator (3) via a sealed connection and is provided with a pneumatic valve (4) for pressure regulation;
iii) a die (8) connected in a sealed manner to the collection chamber and possibly provided with a second liquid compression pump (7) between the chamber (5) and the die (8), which is provided at its outlet with an expansion chamber (9) preferably under suction.

17. An apparatus as claimed in claim 16, wherein the walls of the collection chamber (5) are lined with a layer of an anti-adhesion polymer, preferably teflon or another fluorinated polymer.

18. Granular polyphenylene ethers not containing further polymer additives, having an apparent density greater than 0.3 and up to 0.9 g/cc and preferably greater than 0.5 g/cc, a residual solvent content of less than 2 wt% and preferably less than 1 wt%, an average maximum granule dimension exceeding 0.5 mm and up to 20 mm, and with more than 99 wt% of the granules having a maximum dimension exceeding 0.1 mm.

19. Granular polyphenylene ethers as claimed in claim 18, consisting essentially of a polymer chosen from the group consisting of poly(2,6-dimethyl-1,4-phenylene)ether, poly(2,6-diethyl-1,4-phenylene)ether, poly(2-methyl-6-ethyl-1,4-phenylene) ether, poly(2,6-dipropyl-1,4-phenylene)ether, and poly(2-ethyl-6-propyl-1,4-phenylene)ether, or their mixtures.

20. Granular polyphenylene ethers as claimed in claim 19, consisting essentially of poly(2,6-dimethyl-1,4-phenylene)ether.
